# EUROPÄISCHE PATENTSCHRIFT

(11) **EP 0 748 954 B1**
(45) Veröffentlichungstag und Bekanntmachung des Hinweises auf die Patenterteilung: **27.12.2000**
(21) Anmeldenummer: 96109102.2
(22) Anmeldetag: 06.06.1996
(51) Int. Cl.: F16H 37/08

(54) **Stellkoppelgetriebe**
Variable interconnecting transmission
Transmission d'accouplement variable

(30) Priorität: 13.06.1995 DE 19521486
(43) Veröffentlichungstag der Anmeldung: 18.12.1996
(73) Patentinhaber: CLAAS KGaA, 33428 Harsewinkel (DE)
(72) Erfinder: König, Ralf, 33428 Harsewinkel (DE); König, Heinz, 33428 Harsewinkel (DE)
(74) Vertreter: Weeg, Thomas

(56) Entgegenhaltungen:
- EP-A- 0 559 003
- WO-A-95/17621
- DE-A- 3 147 447
- US-A- 3 340 749
- US-A- 3 479 908
- US-A- 4 990 127
- BEITZ, KÜTTNER: "Dubbel Taschenbuch für den Maschinenbau" 1989 , SPRINGER-VERLAG , BERLIN XP002052317 16. Aufl. * Seite G136; Abbildung 40 *
- PATENT ABSTRACTS OF JAPAN vol. 095, no. 004, 31.Mai 1995 & JP 07 009869 A (ISEKI), 13.Januar 1995,

## Beschreibung

Die Erfindung betrifft ein Stellkoppelgetriebe mit den Merkmalen gemäß dem Oberbegriff von Anspruch 1.

Ein Stellkoppelgetriebe der vorstehend genannten Art ist aus der US 3 340 749 A bekannt.

Die Erfindung betrifft ferner ein Stellkoppelgetriebe mit den Merkmalen gemäß dem Oberbegriff von Anspruch 2.

Ein Stellkoppelgetriebe der vorstehend genannten Art ist aus der US 3 479 908 bekannt.

Es sind bereits zahlreiche Möglichkeiten bekannt, bei einem Getriebe die gegebene Eingangsdrehzahl in eine gewünschte Ausgangsdrehzahl zu übersetzen. Dabei findet nicht nur eine Übersetzung der Drehzahl sondern auch eine Wandlung des Drehmomentes statt. Man spricht daher insoweit von "Kennungswandlung".

Bei eingängigen Getrieben kann die Drehzahl nur in einem festen Verhältnis übersetzt werden. Bei einem mehrgängigen Getriebe kann ein bestimmtes Drehzahlband abgedeckt werden. Beim Umschalten von einem Gang in einen anderen Gang entsteht jedoch bei den meisten Mehrganggetrieben eine Zugkraftunterbrechung, da der Kraftfluß über das Getriebe kurzzeitig aufgetrennt werden muß, um die drehmomentübertragenden Teile des Getriebes, üblicherweise die Zahnräder, miteinander in Eingriff bringen zu können bzw. voneinander zu lösen.

Um die bei Gangwechseln in derartigen Getrieben eintretende Zugkraftunterbrechung zu vermeiden, hat man für bestimmte Einsatzfälle, beispielsweise Ackerschlepper, sogenannte Lastschaltgetriebe entwickelt. Diese tragen jedoch zum Teil die Nachteile eines schlechteren Wirkungsgrades sowie eines hohen Bauaufwandes in sich. Bei Gangwechseln müssen auftretende Drehzahldifferenzen zwischen den Gängen durch aufwendige Reibkupplungen überbrückt werden. In den Fällen, in denen man besonderen Wert auf stufenlos wählbare Übersetzungsverhältnisse legt, nimmt man sogar die noch größeren Wirkungsgradverluste von hydrostatischen Antrieben in Kauf, um die Variabilität des Übersetzungsverhältnisses zu erreichen.

Eine andere Möglichkeit, variable Übersetzungsverhältnisse zu realisieren, ergibt sich aus dem Einsatz von Variatoren mit verstellbaren Riemenscheiben. Derartige Riemengetriebe können jedoch aufgrund ihrer prinzipbedingten Nachteile nur in eng begrenzten Einsatzfällen genutzt werden.

All diese Getriebekonzepte außer Hydrostaten haben den gemeinsamen Nachteil, daß ein zusätzliches Umkehrgetriebe erforderlich ist, wenn man die Abtriebsdrehzahl umkehren möchte, beispielsweise zur Realisierung eines Rückwärtsganges bei einem Fahrzeug.

Um die Wirkungsgrade von Lastschaltgetrieben bei zusätzlich vorhandener Stufenlosigkeit zu verbessern, sind aus dem Stand der Technik auch hydrostatisch-mechanisch leistungsverzweigte Lastschaltgetriebe bekannt. Ein Beispiel eines derartigen Lastschaltgetriebes ist in der DE-A-31 47 447 beschrieben. Auch diese Getriebe haben jedoch den Nachteil, daß sie aufgrund der hydrostatischen Baueinheit sehr aufwendig herzustellen sind.

Über die vorstehend geschilderten Getriebetypen hinaus sind auch die sogenannten Stellkoppelgetriebe der eingangs genannten Art bekannt. Bislang sind derartige Stellkoppelgetriebe im wesentlichen für stationäre Einsatzfälle konzipiert und gebaut worden.

Unter Stellkoppelgetrieben, wie sie prinzipiell in dem DE-Buch "Dubbel, Taschenbuch für den Maschinenbau", 18. Auflage, Springer-Verlag, 1995, Seiten G 146 bis 148, beschrieben sind, versteht man Getriebe, bei denen die Eingangsleistung aufgeteilt und dann in zwei Anteilen einem Summengetriebe zugeführt wird, dessen Ausgang zugleich den Ausgang des Stellkoppelgetriebes bildet. In einen der beiden verzweigten Leistungspfade ist als Nebengetriebe ein Stellgetriebe mit stufenlos verstellbarer Übersetzung geschaltet.

Wenn das Summengetriebe ein Planetengetriebe ist, kann die Eingangsleistung im ersten Zweig direkt auf den Steg des Planetengetriebes und im anderen Zweig über das stufenlos verstellbare Stellgetriebe auf das Hohlrad des Planetengetriebes übertragen werden. Den Ausgang des Stellkoppelgetriebes bildet dann das Sonnenrad bzw. die Sonnenradwelle des Planetengetriebes.

Durch Verstellung der Übersetzung des Stellgetriebes kann nun die Gesamtübersetzung des Stellkoppelgetriebes ebenfalls stufenlos verstellt werden. Dies ist in weiten Bereichen möglich, und, je nach Auslegung, auch über den Nullpunkt hinweg. Auf diese Weise können also am Ausgang des Stellkoppelgetriebes positive wie auch negative Drehzahlen eingestellt werden.

Bekannte Stellkoppelgetriebe der vorstehend genannten Art haben jedoch den Nachteil, daß die Leistung immer über beide Zweige verzweigt wird, so daß entsprechende Blindleistungen entstehen. Darüber hinaus ist bei vielen Anwendungsfällen von Nachteil, daß das Getriebe unter Last beim Anfahren von der Drehzahl Null des stufenlos verstellbaren Stellgetriebes hochgefahren werden muß. Wenn das Stellgetriebe ein Riemengetriebe mit verstellbaren Riemenscheiben ist, kann dies zu besonderen Problemen deswegen führen, weil das Riemengetriebe beim Anfahren in einer Extremstellung stehen kann, so daß der Riemen sich bei den dann wirkenden hohen Riemenkräften quer zur Laufrichtung durchbiegen kann. Auch der Wirkungsgrad des Getriebes wird in diesem Fahrzustand sehr schlecht.

Derartige Anwendungsfälle gibt es jedoch häufig im Fahrzeugbau, also einem Bereich, in dem Stellkoppelgetriebe bislang allenfalls vereinzelt eingesetzt worden sind. Die genannten Probleme entstehen vor allem bei landwirtschaftlich genutzten Fahrzeugen, bei denen Getriebe für den Antrieb landwirtschaftlicher Geräte verwendet werden. Ein typisches Anwendungsbeispiel hierfür ist ein Mähdrescher, dessen Dreschtrommel über ein Getriebe angetrieben werden soll. Wenn die Dreschtrommel aus dem Stillstand angefahren werden soll, können sich bei Verwendung herkömmlicher Stellkoppelgetriebe die vorstehend genannten Nachteile einstellen. Aus diesem Grund sind derartige Einsatzfälle für Stellkoppelgetriebe bislang nicht bekannt geworden.

Aus dem eingangs genannten Dokument US 3 340 749 ist ein Stellkoppelgetriebe bekannt, bei dem das Planeten-Summengetriebe als Umlaufrädergetriebe ausgebildet ist. Umlaufrädergetriebe zeichnen sich dadurch aus, daß sie zwei Zahnradpaare mit je zwei miteinander kämmenden Zahnrädern umfassen, von denen jeweils ein Zahnrad drehfest auf einer gemeinsamen Stegwelle angeordnet ist, während das jeweils andere Zahnrad drehfest mit einer Eingangswelle bzw. einer Ausgangswelle des Umlaufrädergetriebes verbunden ist. Das bekannte Getriebe sieht auch vor, daß die jeweils anderen Zahnräder unterschiedliche Zähnezahlen aufweisen, nämlich das eingangsseitige Zahnrad eine kleinere Zähnezahl als das ausgangsseitige Zahnrad. Schließlich ist die Stegwelle drehbar in einem Steggehäuse gelagert, das drehfest mit einer Hohlwelle verbunden ist.

In dem eingangs erwähnten Dokument US 3 479 908 ist ein Stellkoppelgetriebe beschrieben, bei dem das Planeten-Summengetriebe hingegen als Hohlradgetriebe ausgebildet ist. Das Hohlradgetriebe umfaßt einen Planetensatz, dessen Steg den ersten Eingang bildet.

Insofern gleiche Stellkoppelgetriebe mit einer Umlaufrädergetriebestufe sind auch in den Dokumenten US 4 990 127 sowie WO 95/17621 beschrieben.

Der Erfindung liegt demgegenüber die Aufgabe zugrunde, Stellkoppelgetriebe der eingangs genannten Art dahingehend weiterzubilden, daß unter Beibehaltung der damit erzielbaren Vorteile (großer Übersetzungsbereich, Möglichkeit der Drehrichtungsumkehr, verlustarmer Betrieb in den in der Praxis häufigsten Betriebsarten, stufenlose Variation der Abtriebsdrehzahl unter Last, hoher Wirkungsgrad und kostengünstige Fertigung) eine Bauweise erzielt wird, bei der unzulässig hohe Drehzahlen vermieden werden.

Bei dem eingangs als erstes genannten Stellkoppelgetriebe wird diese Aufgabe erfindungsgemäß durch die Merkmale des Anspruchs 1 gelöst.

Bei einem Stellkoppelgetriebe der eingangs als zweites genannten Art wird die Aufgabe erfindungsgemäß durch die Merkmale des Anspruchs 2 gelöst.

Die der Erfindung zugrundeliegende Aufgabe wird auf diese Weise vollkommen gelöst, wenn gemäß der vorstehenden Festlegung bei einem Stellkoppelgetriebe mit einer Planeten-Umlaufgetriebestufe der Variator an dem Steg und der konstante Leistungspfad am großen Sonnenrad angreift, während bei einem Stellkoppelgetriebe mit Planeten-Hohlradgetriebestufe der Variator an dem Hohlrad und der konstante Leistungspfad an dem Steg angreift. Bei einem derart ausgebildeten Getriebe werden unzulässig hohe Drehzahlen vermieden. In beiden Fällen ist es möglich, in an sich bekannter Weise alternativ in einem lei stungsverzweigten und einem nicht leistungsverzweigten Bereich zu fahren, wobei das Anfahren aufgrund des höheren Drehmoments bei laufenden Wellen erfolgen kann.

Durch wahlweise Ansteuerung der Kupplungen kann erreicht werden, daß die Antriebsleistung einmal nur über den Variator auf den Ausgang durchgeschaltet wird, während andererseits auch ein leistungsverzweigter Betrieb in herkömmlicher Weise möglich ist. Der Ausgang des Planeten-Summengetriebes treibt die Ausgangswelle daher in einer leistungsverzweigten Betriebsart bei geschlossener erster Kupplung und geöffneter zweiter Kupplung an, in einer nicht-leistungsverzweigten Betriebsart hingegen bei geöffneter erster Kupplung und geschlossener zweiter Kupplung.

Auf diese Weise kann ein großer Bereich der möglichen Einsatzfälle des Getriebes dadurch abgedeckt werden, daß lediglich mit dem Variator gearbeitet wird, so daß die im Planeten-Summengetriebe ansonsten anfallenden Blindleistungen nicht mehr auftreten.

Es wird somit ein Planeten-Summengetriebe eingesetzt, bei dem die Eingangsleistung in zwei Leistungspfade aufgeteilt wird. Während der erste Leistungspfad z.B. über einen drehfest auf der Eingangswelle befestigten Variator geleitet wird, der die Kraft über einen Breitkeilriemen auf das Getriebe überträgt, wird der zweite Leistungsanteil über einen Konstant-Antrieb mit fester Übersetzung in das Getriebe geleitet. Bevorzugt ist, wenn der Variator ein Riemengetriebe mit verstellbaren Riemenscheiben ist, der weiter bevorzugt unmittelbar von der Eingangswelle angetrieben wird. Wenn der Konstant-Antrieb ein Riementrieb mit festen Riemenscheiben ist, kann sowohl eine verstellbare wie auch eine feste Riemenscheibe jeweils drehfest auf der Eingangswelle angeordnet werden.

Bei bevorzugten Ausgestaltungen der Erfindung sind die Kupplungen betätigbar, vorzugsweise indem die Kupplungen im Übergangspunkt zwischen zwei Bereichen der Abtriebsdrehzahl oder beim Starten alternativ betätigbar sind.

In bevorzugter Weiterbildung dieser Ausführungsbeispiele ist im ersten, leistungsverzweigten Bereich nur die erste Kupplung geschlossen, derart, daß die auf die Eingangswelle eingespeiste Leistung verzweigt und zu einem Teil im Variator und zum anderen Teil im Planeten-Summengetriebe kennungsgewandelt wird, während im zweiten, nicht-leistungsverzweigten Bereich nur die zweite Kupplung geschlossen ist, derart, daß die auf die Eingangswelle eingespeiste Leistung ausschließlich im Variator kennungsgewandelt wird.

Bei einer Variante dieses Ausführungsbeispiels wird im zweiten Bereich das Planeten-Summengetriebe überbrückt, während bei einer zweiten Variante das Planeten-Summengetriebe im zweiten Bereich als geschlossener Block umläuft.

Mittels der beiden unabhängig voneinander betätigbaren Kupplungen können die Abtriebsdrehzahlen in zwei Bereiche aufgeteilt werden, nämlich in einen leistungsverzweigten und einen nicht-leistungsverzweigten Bereich.

Zur Erreichung eines möglichst hohen Wirkungsgrades ohne Blindleistung sollte der Hauptarbeitsbereich des vom Getriebe angetriebenen Aggregates im nicht-leistungsverzweigten Bereich liegen, der dem Regelbereich des Variators entspricht. Die beiden Bereiche schließen aneinander an.

Bei einer entsprechend günstig gewählten Zahl der Zähne auf den Zahnrädern im Summengetriebe ist es - ausgehend von einer Schaltdrehzahl, bei der die Drehzahl der Antriebswelle identisch ist mit der Drehzahl der Abtriebswelle - möglich, bei einer ansteigenden vom Variator übertragenen Drehzahl die Abtriebsdrehzahl auf Null und bei weiter steigender Variatordrehzahl schließlich die Abtriebsdrehzahl unter Drehrichtungsumkehr in den negativen Bereich zu regeln.

Die zwei Bereiche werden durch die zwei Kupplungen verknüpft, wobei beide Kupplungen bei Drehzahlgleichheit des ersten und des zweiten Bereichs unter Last schaltbar sind. Die zweite Kupplung kuppelt den variablen Leistungspfad über den Variator, die erste Kupplung kuppelt den konstanten Leistungspfad. Durch wahlweise Ansteuerung der Kupplungen kann nun erreicht werden, daß die Antriebsleistung bei Schaltung der zweiten, den Variator kuppelnden Kupplung nur über den Variator in herkömmlicher Weise auf den Ausgang durchgeschaltet wird, während bei Schaltung der ersten Kupplung ein leistungsverzweigter Betrieb möglich ist.

Im Schaltpunkt, in dem Drehzahlgleichheit des ersten und des zweiten Bereichs vorliegt, können kurzzeitig auch beide Kupplungen geschaltet sein. Durch Lösen der einen oder der anderen Kupplung kann zwischen den beiden Bereichen unter Last und ohne Zugkraftunterbrechung hin- und hergeschaltet werden. Ein weiterer wesentlicher Vorteil besteht dabei darin, daß die Kupplungen als formschlüssige Kupplungen ausgebildet werden können, also in verhältnismäßig einfacher und preiswerter Bauart.

Eine gute Wirkung wird erzielt, wenn die Übersetzungen im Variator und dem Planeten-Summengetriebe so gewählt sind, daß etwa in der Mitte des Variatorbereichs im leistungsverzweigten Bereich die Abtriebsdrehzahl der Ausgangswelle gleich Null ist.

Beim Startvorgang sind somit beide Kupplungen offen, und der Variator wird automatisch so geregelt, daß die Getriebeabtriebsdrehzahl Null beträgt. Dann wird die erste Kupplung für den Konstant-Antrieb geschlossen und die Abtriebsdrehzahl auf einen von Null verschiedenen Wert geregelt.

Diese Maßnahme hat den Vorteil, daß zum Anfahren eines vom Getriebe angetriebenen Aggregats nicht von der Drehzahl Null im Variator, sondern vielmehr von einer endlichen Drehzahl ausgegangen werden kann, so daß der Variator mit laufenden Riemen im Bereich seiner höchsten Leistungsdichte belastet wird.

Ferner wird bevorzugt zum Anfahren eines vom Stellkoppelgetriebe angetriebenen Aggregates die Abtriebsdrehzahl über den Variator zunächst auf Null eingestellt und dann bei geschlossener erster Kupplung die Abtriebsdrehzahl auf einen von Null verschiedenen Wert geregelt. Sofern die Abtriebsdrehzahl nicht bereits ohnehin auf Null eingestellt ist und mindestens eine der beiden Kupplungen noch geschlossen ist, werden in bevorzugter Weiterbildung dieser Variante bei einer zunächst von Null verschiedenen Abtriebsdrehzahl zuerst beide Kupplungen geöffnet und die Abtriebsdrehzahl dann über den Variator auf Null eingestellt.

Bevorzugt ist bei der Erfindung ferner, wenn das Getriebe mit konstanter Antriebsdrehzahl der Eingangswelle angetrieben wird.

Weiterhin ist bevorzugt, wenn die Abtriebsdrehzahl der Ausgangswelle stufenlos von positiven über Null zu negativen Drehzahlen einstellbar ist.

Ferner ist besonders bevorzugt, wenn erfindungsgemäß beim Umschalten zwischen den Bereichen die Drehzahlen an den Kupplungen jeweils eingangs- und ausgangsseitig gleich sind, derart, daß ohne Zugkraftunterbrechung geschaltet wird.

Ein erfindungsgemäß ausgestaltetes Getriebe kann sowohl als stufenloses Vorschaltgetriebe für Fahrantriebe in Fahrzeugen als auch als stufenloses Getriebe zum Antrieb von Maschinenkomponenten, beispielsweise einer Dreschtrommel in einem Mähdrescher, eingesetzt werden. In Fahrzeugen, die mit einem erfindungsgemäßen Getriebe ausgestattet werden, ist es möglich, bei konstanter (optimaler) Motordrehzahl die Getriebeübersetzung stufenlos zu regeln und unter Last zu rangieren (vorwärts und rückwärts zu fahren), ohne kuppeln oder Gänge vorwählen zu müssen. Bei Realisierung des Hauptarbeitsbereiches im nicht-leistungsverzweigten Bereich können die sonst in einem Summengetriebe anfallenden Blindleistungen vermieden werden. Auf diese Weise wird ein ökonomischer Betrieb des Fahrzeugs oder der Maschine möglich. Wenn man den üblichen Variatorantrieb von Dreschtrommeln durch ein erfindungsgemäßes Getriebe ersetzt, ist es nicht nur möglich, auf das bisher zwangsläufig erforderliche Reduziergetriebe mit den nachteiligen Schaltvorgängen zu verzichten; man kann zusätzlich eine Reversierfunktion realisieren, die die bekannten Antriebskonzepte nicht ermöglichen würden.

Zu beachten ist, daß bei Realisierung der Erfindung mittels eines Planeten-Umlaufgetriebes der Variator an dem Steg und der konstante Leistungspfad am großen Sonnenrad und bei einem Planeten-Hohlradgetriebe der Variator an dem Hohlrad und der konstante Leistungspfad an dem Steg angreifen muß, wenn unzulässige Drehzahlen innerhalb des Summengetriebes vermieden bzw. die Funktion überhaupt dargestellt werden soll.

Bei Ausgestaltung des erfindungsgemäßen Getriebes als Planeten-Umlaufgetriebe sind zwei Zahnradpaare mit je zwei miteinander kämmenden Zahnrädern vorgesehen. Von diesen ist jeweils ein Zahnrad drehfest auf einer Stegwelle angeordnet, während das jeweils andere Zahnrad drehfest mit einer den ersten Eingangspfad bildenden Eingangswelle bzw. einer den Ausgang bildenden Ausgangswelle verbunden ist. Ferner ist die Stegwelle drehbar in einem Steggehäuse gelagert. Das Steggehäuse ist drehfest mit einer den zweiten Eingangspfad bildenden Hohlwelle verbunden. Möglich wäre beispielsweise auch ein Planetendoppelrad, das drehbar auf der drehfesten Stegwelle gelagert ist. Bei Ausgestaltung des erfindungsgemäßen Getriebes als Planeten-Hohlradgetriebe ist der Variator mit dem Hohlrad verbunden. Die Kupplungen für den Variator und den Konstant-Antrieb wirken bei Betätigung auf die durch das Hohlrad geführte Stegwelle, die mit dem Planetenrad verbunden ist, während die Ausgangswelle am Sonnenrad des Planetensatzes befestigt ist.

Bei den hier beschriebenen Planetengetriebe-Bauarten ist ein kleiner Variator-Regelbereich möglich. Unter einem kleinen Variator-Regelbereich ist in einer praktischen Ausführungsform beispielsweise ein Variatorbereich von iᵥₐᵣ = 2,3 zu verstehen. Von diesem Wert kann jedoch auch nach oben oder unten abgewichen werden. Bei dem vorgeschlagenen Variatorbereich von iᵥₐᵣ = 2,3 ergibt sich der Vorteil, daß mindestens 50 % der maximalen Vorwärtsdrehzahl auch für den Rückwärtsbetrieb zur Verfügung stehen. Die Realisierung der erforderlichen Getriebeübersetzung ist bei einem Planeten-Umlaufgetriebe einfacher, weil man im Vergleich zum Planeten-Hohlradgetriebe größere Freiheiten bei der Wahl der Übersetzung hat. Damit ist das grundsätzliche Ziel, möglichst einen kleinen Variator-Regelbereich anzustreben, da dieser eine höhere Leistungsdichte hat, im Planeten-Umlaufgetriebe leichter realisierbar. Unter hoher Leistungsdichte wird hier ein Variator verstanden, der wegen des kleineren Regelbereiches größere Kleinstdurchmesser und bei festgelegten Außendurchmessern eine schmale obere Riemenbreite bei großer Riemenhöhe sowie übliche Abtriebsdrehzahlen hat, so daß es bei hoher Beanspruchung des Riemens nicht zu einer Durchbiegung des Riemens quer zur Laufrichtung kommen kann. Im Planeten-Umlaufgetriebe ergibt sich zusätzlich der Vorteil, daß die Drehzahlen der Planetenräder niedriger liegen können als bei den meisten Planetengetrieben mit Hohlrad.

Durch die beschriebene Anordnung entsteht ein extrem kompaktes, leistungsdichtes und im Aufbau einfaches Getriebe, das den aufgabengemäßen Anforderungen genügt.

In weiterer Ausgestaltung der Erfindung ist es möglich, durch Anbau eines Wendegetriebes an ein erfindungsgemäßes Planeten-Umlauf- oder -Hohlradgetriebe auch bei Drehzahlumkehr rückwärts im nicht-leistungsverzweigten Bereich ohne Blindleistungen Antriebsleistungen zu übertragen. Die Umkehr der Drehrichtung wird in dieser Ausgestaltung der Erfindung durch das Wendegetriebe bewirkt. Erreicht die Abtriebsdrehzahl des Planeten-Summengetriebes den Wert Null, kann die Wendekupplung geöffnet und das Wendegetriebe geschaltet werden. Die Variatordrehzahl wird bei Erreichen der Abtriebsdrehzahl Null des Planeten-Summengetriebes nicht weiter erhöht. Nach Betätigung des Wendegetriebes wird sie vielmehr verringert, da ansonsten eine unerwünschte Drehzahlumkehr an der Abtriebswelle des Planeten-Summengetriebes eintreten würde. Wird die Variatordrehzahl bei umgekehrter Drehrichtung zur Erhöhung der negativen Abtriebsdrehzahl so weit reduziert, daß sie mit der Drehzahl des Konstant-Antriebs übereinstimmt, kann in oben beschriebener Weise durch Betätigung der Kupplungen im Planeten-Summengetriebe vom leistungsverzweigten auf den nicht-leistungsverzweigten Bereich umgeschaltet werden, in dem dann keine Blindleistungen mehr auftreten.

Je nach Schaltstellung des Wendegetriebes kann man bei der hier vorgeschlagenen Anordnung das volle Drehzahlband der Abtriebswelle sowohl vorwärts als auch rückwärts nutzen. Die niedrigeren Drehzahlen der Abtriebswelle unterhalb der minimalen Variatordrehzahl bis zu einer Abtriebsdrehzahl Null sind bei geschlossener Kupplung des Konstant-Antriebes leistungsverzweigt und die höheren Drehzahlen bei geschlossener Kupplung des Variators nicht-leistungsverzweigt stufenlos regelbar.

In weiterer Ausgestaltung der Erfindung ist es möglich, bei besonders beengten Einbauverhältnissen eingangsseitig den Konstant-Antrieb und/oder den Variator an anderer Stelle der Maschine oder des Fahrzeugs als das Planeten-Summengetriebe anzuordnen. Die vom Konstant-Antrieb und/oder vom Variator zu übertragenden Leistungen können dann mittels an sich bekannter Kraftübertragungselemente in einer oder mehreren Stufen zum jeweiligen Getriebeeingang geführt werden.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematisierte Darstellung eines Ausführungsbeispiels eines erfindungsgemäßen Stellkoppelgetriebes in Form eines Planeten-Umlaufgetriebes;
- Fig. 2: das Getriebe gemäß Fig. 1, in noch weiter schematisierter Darstellung;
- Fig. 3: ein Drehzahldiagramm zur Erläuterung des Getriebes gemäß Fig. 2 ohne Berücksichtigung eines nachgeschalteten Wendegetriebes;
- Fig. 4: ein Drehzahldiagramm, ähnlich dem der Fig. 3, jedoch zur Erläuterung des Getriebs gemäß Fig. 2 mit nachgeschaltetem Wendegetriebe; und
- Fig. 5: eine weitere Darstellung, ähnlich Fig. 2, jedoch für ein weiteres Ausführungsbeispiel der Erfindung in Form eines Planeten-Hohlradgetriebes.

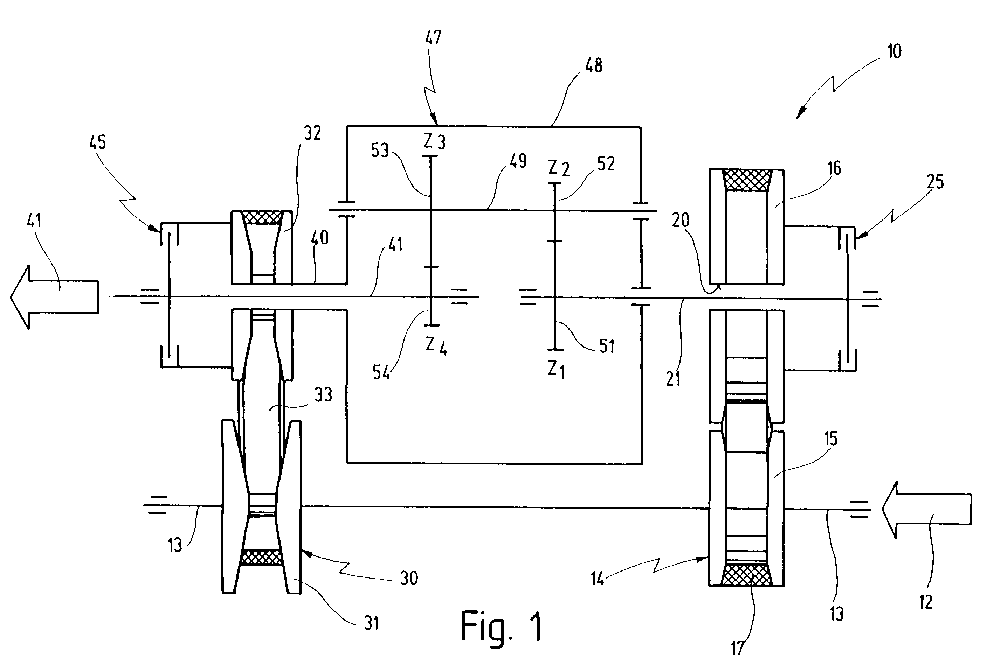

In Fig. 1 bezeichnet 10 insgesamt ein Stellkoppelgetriebe. Ein mit einem Pfeil symbolisierter Getriebeeingang 12 wird durch eine Eingangswelle 13 gebildet. Ein Riementrieb 14 mit konstantem Übersetzungsverhältnis weist eine erste Riemenscheibe 15, eine zweite Riemenscheibe 16 sowie einen diese umschlingenden Riemen 17 auf. Die erste Riemenscheibe 15 ist drehfest mit der Eingangswelle 13 verbunden.

Wie mit 20 angedeutet, sitzt die zweite Riemenscheibe 16 mit einer losen Lagerung auf einer Zwischenwelle 21. Die Zwischenwelle 21 erstreckt sich parallel zur Eingangswelle 13. Mittels einer ersten Kupplung 25 kann die zweite Riemenscheibe 16 in drehfeste Verbindung mit der Zwischenwelle 21 gebracht werden.

Ein Variator 30 mit stufenlos einstellbarem Übersetzungsverhältnis ist beim Stellkoppelgetriebe 10 gemäß Fig. 1 als Riemengetriebe ausgebildet. Der Variator 30 weist eine erste Riemenscheibe 31, eine zweite Riemenscheibe 32 sowie einen diese umschlingenden Riemen 33 auf. Die erste Riemenscheibe 31 ist ebenfalls drehfest auf der Eingangswelle 13 angeordnet.

Demgegenüber sitzt die zweite Riemenscheibe 32 des Variators 30 auf einer Hohlwelle 40, die eine Ausgangswelle 41 umgibt. Die Hohlwelle 40 und die Ausgangswelle 41 verlaufen ebenfalls parallel zur Eingangswelle 13. Sie sind darüber hinaus koaxial zur Zwischenwelle 21 angeordnet.

Mittels einer zweiten Kupplung 45 kann die zweite Riemenscheibe 32 des Variators 30 mit der Hohlwelle 40 drehfest mit der Ausgangswelle 41 verbunden werden.

Die Betätigungs- und Steuereinrichtungen für die Kupplungen 25, 45 sowie den Variator 30 sind in Fig. 1 der Übersichtlichkeit halber nicht dargestellt. Diese Elemente sind an sich bekannt und brauchen daher im vorliegenden Zusammenhang nicht nochmals im einzelnen beschrieben zu werden.

Zwischen die Zwischenwelle 21 einerseits und die Ausgangswelle 41 mit Hohlwelle 40 andererseits ist ein insgesamt mit 47 bezeichnetes Umlaufrädergetriebe geschaltet. Das Umlaufrädergetriebe 47 weist ein Steggehäuse 48 auf. Das Steggehäuse 48 ist an seiner in Fig. 1 linken Seite drehfest mit der Hohlwelle 40 verbunden. Auf seiner in Fig. 1 rechten Seite ist das Steggehäuse 48 auf der Zwischenwelle 21 gelagert.

Im radialen Abstand von der Zwischenwelle 21 und der Ausgangswelle 41 ist eine Stegwelle 49 im Steggehäuse 48 drehbar gelagert bzw. ein Planetendoppelrad 52/53 drehbar auf der drehfesten Stegwelle 49 gelagert.

Innerhalb des Steggehäuses 48 trägt die Zwischenwelle 21 drehfest ein erstes Zahnrad 51, das mit einem auf der Stegwelle 49 drehfest befestigten zweiten Zahnrad 52 kämmt. Ein drittes, ebenfalls mit der Stegwelle 49 drehfest verbundenes Zahnrad 53 kämmt mit einem vierten Zahnrad 54, das drehfest auf der Ausgangswelle 41 angeordnet ist. Auf diese Weise werden zwei Radsätze gebildet, nämlich vom ersten und vom zweiten Zahnrad 51/52 sowie vom dritten und vom vierten Zahnrad 53/54. Die zugehörigen Zähnezahlen der vier Zahnräder 51 bis 54 sind in Fig. 1 mit Z₁ bis Z₄ bezeichnet.

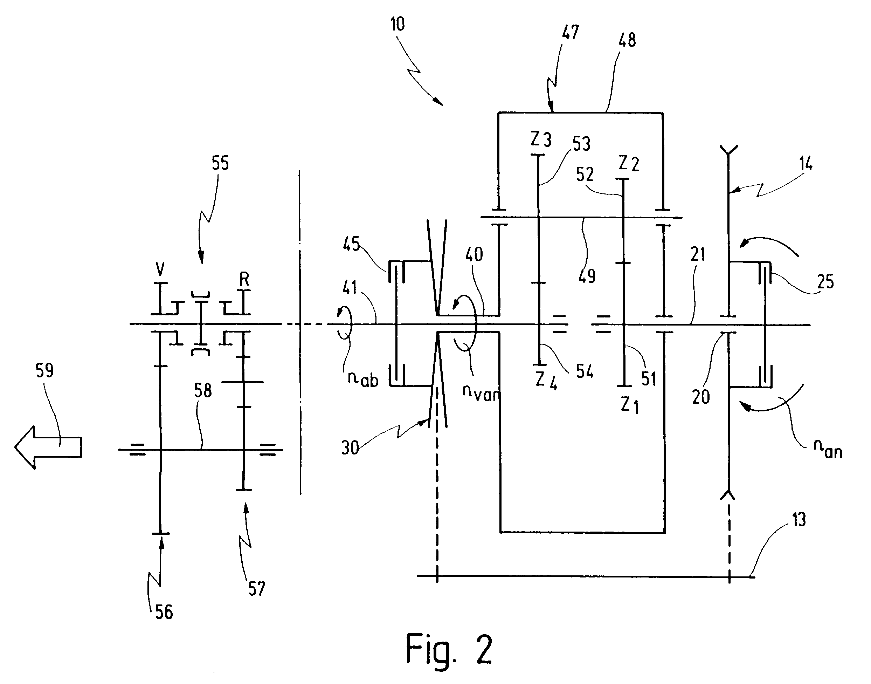

Das Stellkoppelgetriebe 10 gemäß Fig. 1 ist in Fig. 2 nochmals weiter schematisiert dargestellt. Darin ist ferner die Drehzahl der zweiten Riemenscheibe 16 des Riementriebes 14 als Antriebsdrehzahl mit nₐₙ bezeichnet, die Drehzahl der Hohlwelle 40 als Variatordrehzahl nᵥₐᵣ und die Drehzahl der Ausgangswelle 41 schließlich als Abtriebsdrehzahl n_{ab}.

In Fig. 2 ist schließlich noch angedeutet, daß an den Ausgang des Getriebes 10 ein Wendegetriebe 55 angeschlossen werden kann. Diese Option ist durch eine gestrichelte Linie in Fortsetzung der Ausgangswelle sowie eine senkrechte, strichpunktierte Linie angedeutet.

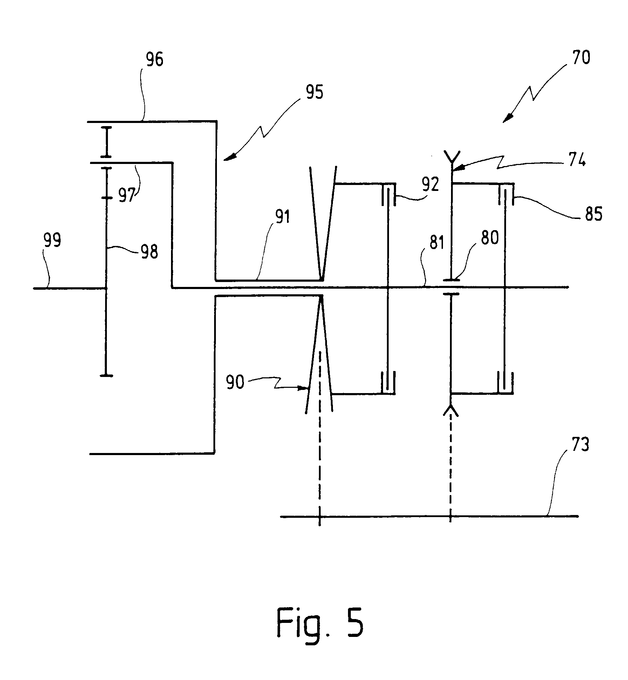

Aufbau, Funktion und Auswirkungen des Wendegetriebes 55 werden weiter unten anhand der Fig. 4 noch erläutert werden.

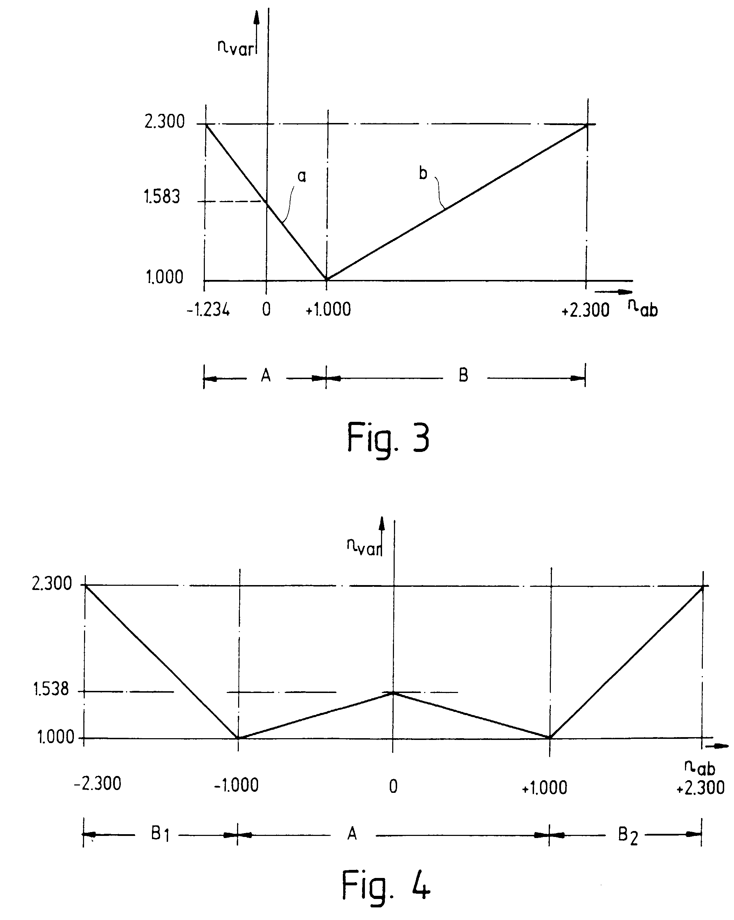

Fig. 3 zeigt ein Diagramm, in dem die Variatordrehzahl nᵥₐᵣ auf der Ordinate und die Abtriebsdrehzahl n_{ab} auf der Abszisse aufgetragen ist. Die beiden Achsen sind dabei mit Drehzahlwerten parametriert, die einem realisierten Ausführungsbeispiel der Erfindung entnommen wurden. Diese Zahlen sind daher lediglich beispielhaft zu verstehen und schränken den Rahmen der vorliegenden Erfindung nicht ein.

Im dargestellten Ausführungsbeispiel unterteilt sich der Drehzahlverlauf bezogen auf die Abtriebsdrehzahl n_{ab} in einen leistungsverzweigten Bereich A und einen nicht-leistungsverzweigten Bereich B, denen Drehzahlverläufe a und b zugehörig sind. Im Bereich A ist die erste Kupplung 25 geschlossen und die zweite Kupplung 45 geöffnet. Im Bereich B hingegen ist die erste Kupplung 25 geöffnet und die zweite Kupplung 45 geschlossen. Damit wird die Eingangsleistung wie folgt übertragen:

Im Bereich A wird die Eingangsleistung verzweigt. Ein erster Teil der Eingangsleistung fließt von der Eingangswelle 13 über den Riementrieb 14 und die geschlossene erste Kupplung 25 auf die Zwischenwelle 21 und von dort über die Übersetzung Z₁/Z₂ der Zahnräder 51, 52 auf die Stegwelle 49. Die Zwischenwelle 21 dient damit als erster Eingang des Umlaufrädergetriebes 47, das als Summengetriebe wirkt.

Der zweite Leistungsanteil fließt über die Eingangswelle 13 und den Variator 30 auf die Hohlwelle 40. Die Hohlwelle 40 treibt das Steggehäuse 48 und damit die Stegwelle 49 an. Die Hohlwelle 40 ist damit der zweite Eingang des als Summengetriebe wirkenden Umlaufrädergetriebes 47.

Über die Übersetzung Z₃/Z₄ der Zahnräder 53, 54 gelangt nun die Summe dieser beiden Leistungsanteile auf die als Ausgang des Umlaufrädergetriebes 47 wirkende Ausgangswelle 41.

Im Bereich B hingegen wird die Eingangsleistung nicht verzweigt. Die Eingangsleistung fließt vielmehr in vollem Umfang über die Eingangswelle 13 auf den Variator 30 und wird von dort unmittelbar über die nun geschlossene zweite Kupplung 45 auf die Ausgangswelle 41 übertragen. Im Bereich B herrscht somit ein reiner Variatorbetrieb.

Wie man aus dem Diagramm der Fig. 3 entnehmen kann, stellt sich bei Durchsteuerung des Übersetzungsverhältnisses des Variators bei konstanter Antriebsdrehzahl nₐₙ der dargestellte Verlauf ein. Die Abtriebsdrehzahl ändert sich dabei im Bereich A beim Durchsteuern des Übersetzungsverhältnis-Bereiches des Variators 30 von zum Beispiel -1.234 über Null auf +1.000 min⁻¹, während die Variatordrehzahl nᵥₐᵣ währenddessen von 2.300 auf 1.000 min⁻¹ absinkt.

Bemerkenswert ist dabei, daß bei einer Variatordrehzahl von zum Beispiel 1.583 min⁻¹ die Abtriebsdrehzahl n_{ab} gerade Null ist. Dies bedeutet, daß ein an das Getriebe 10 angeschlossenes Aggregat aus dem Stillstand in positive oder negative Drehzahlen gefahren werden kann, ausgehend von einer endlichen Drehzahl des Variators 30. Der Variator 30 wird daher im Gegensatz zu bekannten Getriebeanordnungen nicht aus dem Stillstand heraus angefahren.

Im Umschaltpunkt bei zum Beispiel +1.000 min⁻¹ der Abtriebsdrehzahl n_{ab} haben die zweite Riemenscheibe 32 des Variators und die Ausgangswelle 41 gerade dieselbe Drehzahl, ebenso wie die Zwischenwelle 21 und die zweite Riemenscheibe 16 des Riementriebes 14 dieselbe Drehzahl aufweisen. Die Kupplungen 25 und 45 können somit lastfrei umgeschaltet werden. Dies ermöglicht es, die Kupplungen 25, 45 als einfache formschlüssige Kupplungen, zum Beispiel als Zahn-, Nocken oder Klauenkupplungen, auszubilden.

Nach dem Umschalten der Kupplungen 25, 45 wird bei erneutem Durchstimmen des Übersetzungsbereiches des Variators 30 von +1.000 auf +2.300 min⁻¹ die Abtriebsdrehzahl n_{ab} von zum Beispiel +1.000 auf +2.300 min⁻¹ erhöht, wie durch den Verlauf b in Fig. 3 deutlich gezeigt ist.

Bei diesem Ausführungsbeispiel wurde zur Berechnung der Drehzahlen eine Verzahnung der Zahnräder 51 bis 54 angenommen, bei der Z₁ = 29, Z₂ = 16, Z₃ = 27 und Z₄ = 18 ist. Der Durchstimmbereich des Variators 30 wurde mit iᵥₐᵣ = 2,3 angenommen. Die konstante Antriebsdrehzahl wurde dabei so gewählt, daß diese der minimalen Variatorabtriebsdrehzahl nᵥₐᵣ von bspw. 1.000 min⁻¹ entspricht.

Dies bedeutet, daß der Bereich B als Haupt-Arbeitsbereich eingesetzt werden kann, bei dem das Umlaufrädergetriebe 47 außer Funktion ist. Dieser Bereich B ist vergleichbar mit herkömmlichen Anwendungsbereichen von Variatoren.

Bei Verwendung des Getriebes 10 als Fahrantrieb wird der Bereich A für das Absenken der Abtriebsdrehzahl n_{ab} unterhalb von 1.000 min⁻¹ bis 0 min⁻¹ und für das Anfahren bei Drehzahl Null sowie für Rangieren bei Drehzahl Null verwendet. Ein Rückwärtsfahren ist bis zu einer Abtriebsdrehzahl n_{ab} von -1.234 min⁻¹ möglich. Der Variator läuft dann mit nᵥₐᵣ = 2.300 min⁻¹.

Wird das Getriebe 10 zum Antrieb einer Trommel verwendet, bspw. einer Dreschtrommel in einem Mähdrescher, so dient der Bereich A zur Absenkung der Abtriebsdrehzahl n_{ab} und zum Reversieren.

Zum Anfahren des Getriebes geht man wie folgt vor:

Wenn das Getriebe vom vorausgegangenen Betrieb noch nicht so eingestellt ist, daß die Abtriebsdrehzahl n_{ab} = 0 ist, müssen zunächst beide Kupplungen 25 und 45 geöffnet werden. Durch Einstellen des Variators auf eine Variatordrehzahl nᵥₐᵣ = 1.583 min⁻¹ bei einem Konstantantrieb von bspw. n = 1.000 min¹ wird die Abtriebsdrehzahl auf n_{ab} = 0 eingestellt. Es kann nun die erste Kupplung 25 geschlossen werden. Da die Abtriebsdrehzahl n_{ab} = 0 ist, steht die angetriebene Dreschtrommel. Bei einer Änderung der Variatordrehzahl nᵥₐᵣ fährt das angetriebene Aggregat nun an.

Wenn die Abtriebsdrehzahl n_{ab} im vorausgegangenen Betrieb bereits auf Null eingestellt und das Getriebe in dieser Stellung abgeschaltet worden war, ist das Öffnen der Kupplungen 25 und 45 und das Einstellen der Abtriebsdrehzahl auf einer n_{ab} = 0 naturgemäß nicht erforderlich. In diesem Fall kann vielmehr sogleich die erste Kupplung 25 geschlossen und das Aggregat durch Änderung der Variatordrehzahl nᵥₐᵣ angefahren werden.

Es wurde bereits weiter oben erwähnt, daß das in Fig. 2 dargestellte Stellkoppelgetriebe 10 ausgangsseitig noch mit einem Wendegetriebe 55 beschaltet werden kann. Das Wendegetriebe 55 ist hierzu an die Ausgangswelle 41 angeschlossen.

Das Wendegetriebe 55 umfaßt einen ersten Radsatz 56 mit zwei Zahnrädern sowie einen zweiten Radsatz 57 mit drei Zahnrädern. Über den ersten Radsatz 56 kann der Ausgang des Stellkoppelgetriebes 10 in Vorwärtsrichtung R und über den zweiten Radsatz 57 in Rückwärtsrichtung V betrieben werden. Eine Ausgangswelle 58 des Wendegetriebes 55 bildet zugleich den mit einem Pfeil angedeuteten Getriebeausgang 59.

In Fig. 4 ist in einer Darstellung ähnlich Fig. 3 das zugehörige Drehzahldiagramm dargestellt, das sich bei Verwendung des Wendegetriebes 55 einstellt.

Man erkennt, daß es neben einem leistungsverzweigten Bereich A zwei zugehörige nicht-leistungsverzweigte Bereiche B₁ und B₂ gibt. Im leistungsverzweigten Bereich A ist die erste Kupplung 25 geschlossen, während in den nicht-leistungsverzweigten Bereichen B₁ und B₂ die zweite Kupplung 45 geschlossen ist. Betreibt man das Wendegetriebe 55 in Vorwärtsrichtung V unter Einschaltung des ersten Radsatzes 57, so verändert sich die Abtriebsdrehzahl im leistungsverzweigten Bereich A vom Wert Null auf den Wert +1.000 min⁻¹, während zugleich die Variatordrehzahl von +1.538 min⁻¹ auf 1.000 min⁻¹ abfällt. Im nicht-leistungsverzweigten Bereich B₂ steigt die Abtriebsdrehzahl n_{ab} dann von +1.000 auf +2.300 min⁻¹, während zugleich die Variatordrehzahl von 1.000 min⁻¹ auf 2.300 min⁻¹ zunimmt.

In Rückwärtsrichtung R sind die Verhältnisse gerade spiegelbildlich umgekehrt, wie deutlich aus Fig. 4 zu entnehmen ist.

Das dargestellte Beispiel entspricht einer Anordnung mit iᵥₐᵣ = 2,3 und einer Eingangsdrehzahl nₐₙ von 1.000 min⁻¹.

Aus dem Diagramm gemäß Fig. 4 ist leicht erkennbar, daß das Wendegetriebe 55 geöffnet werden kann, wenn die Abtriebsdrehzahl n_{ab} gleich Null ist. Die Variatordrehzahl beträgt dann +1.583 min⁻¹. Bei geöffnetem Wendegetriebe 55 kann von der Vorwärtsrichtung V in die Rückwärtsrichtung R oder umgekehrt umgeschaltet werden.

Wie bereits eingangs erwähnt wurde, fällt die Variatordrehzahl nᵥₐᵣ zu beiden Seiten des Nullpunktes der Abtriebsdrehzahl n_{ab} ab, da ansonsten eine unerwünschte Drehzahlumkehr an der Ausgangswelle 41 des Planeten-Summengetriebes 47 eintreten würde.

Im übrigen zeigt Fig. 4, daß das volle Drehzahlband von -2.300 bis +2.300 min⁻¹ an Abtriebsdrehzahl n_{ab} stufenlos durchfahren werden kann.

Schließlich zeigt Fig. 5 noch eine Variante eines Stellkoppelgetriebes 70, das gegenüber dem Stellkoppelgetriebe 10 gemäß den Figuren 1 und 2 abgewandelt ist.

Von einer Eingangswelle 73 kann die Eingangsleistung zunächst auf einen Riementrieb 74 mit konstantem Übersetzungsverhältnis übertragen werden. Der Riementrieb 74 sitzt mit einer losen Lagerung 80 auf einer Zwischenwelle 81. Mittels einer ersten Kupplung 85 kann die lose gelagerte Riemenscheibe des Riementriebes 74 drehfest mit der Zwischenwelle 81 verbunden werden.

Von der Eingangswelle 73 kann Leistung ferner auf einen Variator 90 mit variablem Übersetzungsverhältnis übertragen werden. Der Variator 90 ist auf einer Hohlwelle 91 drehfest angeordnet. Mittels einer zweiten Kupplung 92 kann die auf der Hohlwelle 91 befestigte Riemenscheibe des Variators 90 drehfest mit der Zwischenwelle 81 verbunden werden.

Ein Planeten-Hohlradgetriebe 95 weist ein Hohlrad 96, einen Steg 97 sowie ein Sonnenrad 98 auf. Eine Ausgangswelle 99 ist drehfest mit dem Sonnenrad 98 verbunden. Sie erstreckt sich in Verlängerung der Zwischenwelle 81, auf der konzentrisch die Hohlwelle 91 sitzt. Das Hohlrad 96 ist drehfest mit der Hohlwelle 91, und der Steg 97 ist drehfest mit der Zwischenwelle 81 verbunden.

Das Stellkoppelgetriebe 70 gemäß Fig. 5 arbeitet wie folgt:

Im nicht-leistungsverzweigten Betrieb wird die zweite Kupplung 92 geschlossen. Dann ist über die Hohlwelle 91, die auf der Hohlwelle 91 befestigte Riemenscheibe des Variators 90, die zweite Kupplung 92 und die Zwischenwelle 81 das Hohlrad 96 drehfest mit dem Steg 97 verbunden. Das Planeten-Hohlradgetriebe 95 läuft dann als fester Block um. Die Eingangsleistung wird dann von der Eingangswelle 73 über den Variator 90 unmittelbar auf die Ausgangswelle 99 übertragen.

Im leistungsverzweigten Betrieb hingegen ist nur die erste Kupplung 85 geschlossen. Das Planeten-Hohlradgetriebe 95 wirkt nun als Summengetriebe. Ein Teil der auf die Eingangswelle 73 eingespeisten Eingangsleistung des Stellkoppelgetriebes 70 wird nun über den Riementrieb 74, die geschlossene erste Kupplung 85 und die Zwischenwelle 81 auf den Steg 97 übertragen. Ein zweiter Teil der Eingangsleistung gelangt über den Variator 90 und die Hohlwelle 91 auf das Hohlrad 96. Im Planeten-Hohlradgetriebe 95 werden die beiden Leistungsanteile wieder summiert und als Summe dem Sonnenrad 98 bzw. der Ausgangswelle 99 zugeführt.

Im übrigen entspricht die Funktion des Stellkoppelgetriebes 70 der Funktion des Stellkoppelgetriebes 10 gemäß den Figuren 1 und 2, so daß auch die Verhältnisse des Drehzahldiagramms gemäß Fig. 3 erhalten bleiben.

Wird das Stellkoppelgetriebe 70 gemäß Fig. 5 ebenfalls mit einem Wendegetriebe am Ausgang beschaltet (vergleiche Fig. 2), so entsteht ein Drehzahldiagramm ähnlich dem der Fig. 4.

## Patentansprüche

1. Stellkoppelgetriebe enthaltend:
a) eine Eingangswelle (13),
b) einen Variator (30) mit stufenlos einstellbaren Übersetzungsverhältnis, der eingangsseitig von der Eingangswelle (13) angetrieben wird,
c) ein Planeten-Summengetriebe, das ein Umlaufrädergetriebe (47) mit einem ersten Eingang, einem zweiten Eingang und einem Ausgang ist, wobei
- der erste Eingang von der Eingangswelle (13) und der zweite Eingang vom Ausgang des Variators (30) antreibbar ist,
- das Umlaufrädergetriebe (47) zwei Zahnradpaare mit je zwei miteinander kämmenden Zahnrädern (51/52, 53/54) umfaßt, von denen jeweils ein Zahnrad (52, 53) drehfest auf einer gemeinsamen Stegwelle (49) angeordnet ist, während das jeweils andere Zahnrad (51, 54) drehfest mit einer Umlaufrädergetriebe-Eingangswelle (21) bzw. einer den Ausgang bildenden Umlaufrädergetriebe-Ausgangswelle (41) verbunden ist, weiterhin die jeweils anderen Zahnräder (51, 54) unterschiedliche Zähnezahlen (Z₁, Z₄) aufweisen und die Stegwelle (49) drehbar in einem Steggehäuse (48) gelagert ist, das drehfest mit einer Hohlwelle (40) verbunden ist,
d) eine erste Kupplung (25) im Kraftfluß zwischen der Eingangswelle (13) und dem ersten Eingang (21) des Umlaufrädergetriebes (47),
e) eine zweite Kupplung (45) im Kraftfluß zwischen dem Ausgang des Variators (30) und dem Ausgang (41) des Umlaufrädergetriebes (47), und
f) eine Ausgangswelle (41), die vom Ausgang des Umlaufrädergetriebes (47) angetrieben wird,
dadurch gekennzeichnet, daß
g) die Umlaufrädergetriebe-Eingangswelle (21) den ersten Eingang und die Hohlwelle (40) den zweiten Eingang des Umlaufrädergetriebes (47) bilden, und daß
h) die Zähnezahl (Z₁) des auf der Umlaufrädergetriebe-Eingangswelle (21) sitzenden anderen Zahnrades (51) größer ist als die Zähnezahl (Z₄) des auf der Umlaufrädergetriebe-Ausgangswelle (41) sitzenden anderen Zahnrades (54).

2. Stellkoppelgetriebe enthaltend:
a) eine Eingangswelle (73),
b) einen Variator (90) mit stufenlos einstellbaren Übersetzungsverhältnis, der eingangsseitig von der Eingangswelle (73) angetrieben wird,
c) ein Planeten-Summengetriebe, das ein Hohlradgetriebe (95) ist mit einem ersten Eingang (81), einem zweiten Eingang (91) und einem Ausgang (99), wobei der erste Eingang (81) von der Eingangswelle (73) und der zweite Eingang (91) vom Ausgang des Variators (90) antreibbar ist, wobei ferner das Hohlradgetriebe (95) einen Planetensatz umfaßt, dessen Steg (97) den ersten Eingang (81) bildet,
d) eine erste Kupplung (85) im Kraftfluß zwischen der Eingangswelle (73) und dem ersten Eingang (81) des Hohlradgetriebes (95),
e) eine zweite Kupplung (92) im Kraftfluß zwischen dem Ausgang des Variators (90) und dem Ausgang (99) des Hohlradgetriebes (95), und
f) eine Ausgangswelle (99), die vom Ausgang des Hohlradgetriebes (95) angetrieben wird,
dadurch gekennzeichnet, daß
g) das Hohlrad (96) den zweiten Eingang (91) und das Sonnenrad (98) den Ausgang (99) des Hohlradgetriebes (95) bilden.

3. Stellkoppelgetriebe nach Anspruch 1 oder 2, dadurch gekennzeichnet, daß die Eingangswelle (13; 73) den Variator (30; 90) unmittelbar antreibt.

4. Stellkoppelgetriebe nach einem oder mehreren der Ansprüche 1 bis 3, dadurch gekennzeichnet, daß die Eingangswelle (13; 73) den ersten Eingang (21; 81) des Planeten-Summengetriebes (47; 95) über eine feste Übersetzung antreibt.

5. Stellkoppelgetriebe nach einem oder mehreren der Ansprüche 1 bis 4, dadurch gekennzeichnet, daß der Variator (30; 90) ein Riementrieb mit verstellbaren Riemenscheiben (31, 32) ist.

6. Stellkoppelgetriebe nach einem oder mehreren der Ansprüche 1 bis 5, dadurch gekennzeichnet, daß die feste Übersetzung ein Riementrieb (14; 74) mit festen Riemenscheiben (15, 16) ist.

7. Stellkoppelgetriebe nach Anspruch 5 und 6, dadurch gekennzeichnet, daß eine verstellbare und eine feste Riemenscheibe (31 und 15) drehfest auf der Eingangswelle (13; 73) angeordnet sind.

8. Stellkoppelgetriebe nach einem oder mehreren der Ansprüche 1 bis 7, dadurch gekennzeichnet, daß die Kupplungen (25, 45; 85, 92) alternativ betätigbar sind.

9. Stellkoppelgetriebe nach Anspruch 8, dadurch gekennzeichnet, daß die Kupplungen (25, 45; 85, 92) im Übergangspunkt zwischen zwei Bereichen (A, B) der Abtriebsdrehzahl (n_{ab}) alternativ betätigbar sind.

10. Stellkoppelgetriebe nach Anspruch 8 oder 9, dadurch gekennzeichnet, daß die Kupplungen (25, 45; 85, 92) beim Starten alternativ betätigbar sind.

11. Stellkoppelgetriebe nach einem oder mehreren der Ansprüche 8 bis 10, dadurch gekennzeichnet, daß im ersten, leistungsverzweigten Bereich (A) nur die erste Kupplung (25; 85) geschlossen ist, derart, daß die auf die Eingangswelle (13; 73) eingespeiste Leistung verzweigt und zu einem Teil im Variator (30; 90) und zum anderen Teil im Planeten-Summengetriebe (47; 95) kennungsgewandelt wird, während im zweiten, nicht-leistungsverzweigten Bereich (B) nur die zweite Kupplung (45; 92) geschlossen ist, derart, daß die auf die Eingangswelle (13; 73) eingespeiste Leistung ausschließlich im Variator (30; 90) kennungsgewandelt wird.

12. Stellkoppelgetriebe nach Anspruch 11, dadurch gekennzeichnet, daß im zweiten Bereich (B) das als Umlaufgetriebe ausgebildete Planeten-Summengetriebe (47) überbrückt wird.

13. Stellkoppelgetriebe nach Anspruch 11, dadurch gekennzeichnet, daß im zweiten Bereich (B) das als Hohlradgetriebe ausgebildete Planeten-Summengetriebe (95) als geschlossener Block umläuft.

14. Stellkoppelgetriebe nach einem oder mehreren der Ansprüche 11 bis 13, dadurch gekennzeichnet, daß die Übersetzungen im Variator (30; 90) und im Planeten-Summengetriebe (47; 95) so gewählt sind, daß etwa in der Mitte des Variatorbereichs im ersten Bereich (A) die Abtriebsdrehzahl (n_{ab}) der Ausgangswelle (41; 99) gleich Null ist.

15. Stellkoppelgetriebe nach Anspruch 14, dadurch gekennzeichnet, daß zum Anfahren eines vom Stellkoppelgetriebe (10; 70) angetriebenen Aggregates die Abtriebsdrehzahl (n_{ab}) über den Variator (30; 90) zunächst auf Null eingestellt und dann bei geschlossener erster Kupplung (25; 85) die Abtriebsdrehzahl (n_{ab}) auf einen von Null verschiedenen Wert geregelt wird.

16. Stellkoppelgetriebe nach Anspruch 15, dadurch gekennzeichnet, daß bei einer zunächst von Null verschiedenen Abtriebsdrehzahl (n_{ab}) zuerst beide Kupplungen (25, 45; 85, 92) geöffnet werden und die Abtriebsdrehzahl (n_{ab}) dann über den Variator (30; 90) auf Null eingestellt wird.

17. Stellkoppelgetriebe nach einem oder mehreren der Ansprüche 1 bis 16, dadurch gekennzeichnet, daß es mit konstanter Antriebsdrehzahl (nₐₙ) der Eingangswelle (13; 73) angetrieben wird.

18. Stellkoppelgetriebe nach einem oder mehreren der Ansprüche 1 bis 17, dadurch gekennzeichnet, daß die Abtriebsdrehzahl (n_{ab}) der Ausgangswelle (41; 99) in Abhängigkeit von der eingestellten Übersetzung des Stellkoppelgetriebes (10; 70) stufenlos von positiven über Null zu negativen Drehzahlen einstellbar ist.

19. Stellkoppelgetriebe nach einem oder mehreren der Ansprüche 9 bis 18, dadurch gekennzeichnet, daß beim Umschalten zwischen den Bereichen (A, B) die Drehzahlen an den Kupplungen (25, 45; 85, 92) jeweils eingangs- und ausgangsseitig gleich sind, derart, daß ohne Zugkraftunterbrechung geschaltet wird.

20. Stellkoppelgetriebe nach Anspruch 19, dadurch gekennzeichnet, daß die Kupplungen (25, 45; 85, 92) als formschlüssige Kupplungen ausgebildet sind.

21. Stellkoppelgetriebe nach einem oder mehreren der Ansprüche 1 bis 20, dadurch gekennzeichnet, daß der Variator (30; 90) baulich im Abstand vom Planeten-Summengetriebe (47; 95) angeordnet ist.

22. Stellkoppelgetriebe nach einem oder mehreren der Ansprüche 4 bis 21, dadurch gekennzeichnet, daß die feste Übersetzung baulich im Abstand vom Planeten-Summengetriebe (47; 95) angeordnet ist.

23. Stellkoppelgetriebe nach einem oder mehreren der Ansprüche 1 bis 22, dadurch gekennzeichnet, daß ausgangsseitig ein Wendegetriebe (55) angeordnet ist.

24. Stellkoppelgetriebe nach Anspruch 23, dadurch gekennzeichnet, daß das Wendegetriebe (55) einen ersten Radsatz (56) mit gerader Radzahl zum Antrieb in einer Rückwärtsrichtung (R) sowie einen zweiten Radsatz (57) mit ungerader Radzahl zum Antrieb in eine Vorwärtsrichtung (V) sowie eine Kupplung umfaßt, mit der wahlweise der erste Radsatz (56) oder der zweite Radsatz (57) in den Kraftfluß von der Ausgangswelle (41; 99) des Stellkoppelgetriebes (10; 70) schaltbar ist.

25. Stellkoppelgetriebe nach einem oder mehreren der Ansprüche 1 bis 24, gekennzeichnet durch seine Verwendung als Vorschaltgetriebe für Fahrantriebe.

26. Stellkoppelgetriebe nach einem oder mehreren der Ansprüche 1 bis 24, gekennzeichnet durch seine Verwendung als Antrieb von Maschinenkomponenten.

27. Stellkoppelgetriebe nach Anspruch 26, gekennzeichnet durch seine Verwendung als Antrieb von Arbeitskomponenten landwirtschaftlicher Maschinen.

## Claims

1. An adjusting coupling transmission including
a) an input shaft (13),
b) a variable speed unit (30) with steplessly adjustable transmission ratio, which is driven at the input side by the input shaft (13),
c) a planetary summing transmission which is a planetary gear assembly (47) with a first input, a second input and an output, wherein
- the first input is drivable by the input shaft (13) and the second input is drivable by the output of the variable speed unit (30),
- the planetary gear assembly (47) includes two pairs of gears each having two mutually meshing gears (51/52. 53/54), of which a respective gear (52, 53) is arranged non-rotatably on a common lay shaft (49) while the respective other gear (51, 54) is connected non-rotatably to a planetary gear assembly input shaft (21) and a planetary gear assembly output shaft (41) forming the output, and furthermore the respective other gears (51, 54) have different numbers of teeth (Z₁, Z₄) and the lay shaft (49) is supported rotatably in a lay shaft housing (48) which is connected non-rotatably to a hollow shaft (40),
d) a first coupling (25) in the flow of force between the input shaft (13) and the first input (21) of the planetary gear assembly (47),
e) a second coupling (45) in the flow of force between the output of the variable speed unit (30) and the output (41) of the planetary gear assembly (47), and
f) an output shaft (41) which is driven by the output of the planetary gear assembly (47),
characterised in that
g) the planetary gear assembly input shaft (21) forms the first input of the planetary gear assembly (47) and the hollow shaft (40) forms the second input thereof, and
h) the number of teeth (Z₁) of the other gear (51) carried on the planetary gear assembly input shaft (21) is greater than the number of teeth (Z₄) of the other gear (54) carried on the planetary gear assembly output shaft (41).

2. An adjusting coupling transmission including
a) an input shaft (73),
b) a variable speed unit (90) with steplessly adjustable transmission ratio, which is driven at the input side by the input shaft (73),
c) a planetary summing transmission which is a ring gear assembly (95) with a first input (81), a second input (91) and an output (99), wherein the first input (81) is drivable by the input shaft (73) and the second input (91) is drivable by the output of the variable speed unit (90), wherein moreover the ring gear assembly (95) includes a planetary unit whose arm (97) forms the first input (81),
d) a first coupling (85) in the flow of force between the input shaft (73) and the first input (81) of the ring gear assembly (95),
e) a second coupling (92) in the flow of force between the output of the variable speed unit (90) and the output (99) of the ring gear assembly (95), and
f) an output shaft (99) which is driven by the output of the ring gear assembly (95),
characterised in that
g) the ring gear (96) forms the second input (91) of the ring gear assembly (95) and the sun gear (98) forms the output (99) of the ring gear assembly (95).

3. An adjusting coupling transmission according to claim 1 or claim 2 characterised in that the input shaft (13; 73) directly drives the variable speed unit (30; 90).

4. An adjusting coupling transmission according to one or more of claims 1 to 3 characterised in that the input shaft (13; 73) drives the first input (21; 81) of the planetary summing transmission (47; 95) by way of a fixed transmission arrangement.

5. An adjusting coupling transmission according to one or more of claims 1 to 4 characterised in that the variable speed unit (30; 90) is a belt drive with adjustable pulleys (31, 32).

6. An adjusting coupling transmission according to one or more of claims 1 to 5 characterised in that the fixed transmission arrangement is a belt drive (14; 74) with fixed pulleys (15, 16).

7. An adjusting coupling transmission according to claim 5 and claim 6 characterised in that an adjustable and a fixed pulley (31 and 15) are arranged non-rotatably on the input shaft (13; 73).

8. An adjusting coupling transmission according to one or more of claims 1 to 7 characterised in that the couplings (25, 45; 85, 92) are alternatively actuable.

9. An adjusting coupling transmission according to claim 8 characterised in that the couplings (25, 45; 85, 92) are alternatively actuable in the transitional point between two ranges (A, B) of the output drive rotary speed (n_{ab}).

10. An adjusting coupling transmission according to claim 8 or claim 9 characterised in that the couplings (25, 45; 85, 92) are alternatively actuable upon starting.

11. An adjusting coupling transmission according to one or more of claims 8 to 10 characterised in that in the first, power-split range (A) only the first coupling (25; 85) is closed in such a way that the power fed on to the input shaft (13; 73) is split and involved in characteristic conversion for one part in the variable speed unit (30; 90) and for the other part in the planetary summing transmission (47; 95) while in the second non-power-split range (B) only the second coupling (45; 92) is closed in such a way that the power fed on to the input shaft (13; 73) involves characteristic conversion exclusively in the variable speed unit (30; 90).

12. An adjusting coupling transmission according to claim 11 characterised in that the planetary summing transmission (47) which is in the form of a planetary gear assembly is bridged over in the second range (B).

13. An adjusting coupling transmission according to claim 11 characterised in that in the second range (B) the planetary summing transmission (95) which is in the form of a ring gear transmission rotates as a closed block.

14. An adjusting coupling transmission according to one or more of claims 11 to 13 characterised in that the transmission arrangements in the variable speed unit (30; 90) and in the planetary summing transmission (47; 95) are so selected that approximately in the middle of the variable speed unit range in the first range (A) the output drive rotary speed (n_{ab}) of the output shaft (41; 99) is equal to zero.

15. An adjusting coupling transmission according to claim 14 characterised in that for starting a unit driven by the adjusting coupling transmission (10; 70) the output drive rotary speed (n_{ab}) is firstly set to zero by way of the variable speed unit (30; 90) and then with the first coupling (25; 85) closed the output drive rotary speed (n_{ab}) is regulated to a value different from zero.

16. An adjusting coupling transmission according to claim 15 characterised in that at an output drive rotary speed (n_{ab}) which is initially different from zero firstly both couplings (25, 45; 85, 92) are opened and the output drive rotary speed (n_{ab}) is then set to zero by way of the variable speed unit (30; 90).

17. An adjusting coupling transmission according to one or more of claims 1 to 16 characterised in that it is driven at a constant drive speed (nₐₙ) of the input shaft (13; 73).

18. An adjusting coupling transmission according to one or more of claims 1 to 17 characterised in that the output drive rotary speed (n_{ab}) of the output shaft (41; 99) is steplessly adjustable from positive speeds by way of zero to negative speeds in dependence on the set transmission ratio of the adjusting coupling transmission (10; 70).

19. An adjusting coupling transmission according to one or more of claims 9 to 18 characterised in that when changing over between the ranges (A, B) the rotary speeds at the couplings (25, 45; 85, 92) are respectively the same at the input and output sides in such a way that shifting is effected without an interruption in traction force.

20. An adjusting coupling transmission according to claim 19 characterised in that the couplings (25, 45; 85, 92) are in the form of couplings involving positively locking engagement.

21. An adjusting coupling transmission according to one or more of claims 1 to 20 characterised in that the variable speed unit (30; 90) is arranged structurally at a spacing from the planetary summing transmission (47; 95).

22. An adjusting coupling transmission according to one or more of claims 4 to 21 characterised in that the fixed transmission arrangement is arranged structurally at a spacing from the planetary summing transmission (47; 95).

23. An adjusting coupling transmission according to one or more of claims 1 to 22 characterised in that a reversing transmission (55) is arranged at the output end.

24. An adjusting coupling transmission according to claim 23 characterised in that the reversing transmission (55) has a first gear set (56) with an even number of gears for driving in a rearward direction (R) and a second gear set (57) with an odd number of gears for driving in a forward direction (V) and a coupling with which selectively the first gear set (56) or the second gear set (57) can be shifted into the flow of force from the output shaft (41; 99) of the adjusting coupling transmission (10; 70).

25. An adjusting coupling transmission according to one or more of claims 1 to 24 characterised by use thereof as a transfer range transmission for travelling drives.

26. An adjusting coupling transmission according to one or more of claims I to 24 characterised by use thereof as a drive for machine components.

27. An adjusting coupling transmission according to claim 26 characterised by use thereof as a drive for working components of agricultural machines.

## Revendications

1. Transmission à variation continue comprenant :
a) un arbre d'entrée (13),
b) un variateur (30) à rapport de transmission réglable de façon continue qui, côté entrée, est entraîné par l'arbre d'entrée (13),
c) un réducteur-combinateur à engrenages planétaires qui se présente sous la forme d'un réducteur à engrenage cylindrique extérieur (47) avec une première entrée, une deuxième entrée et une sortie, la première entrée étant entraînée par l'arbre d'entrée (13) et la deuxième entrée étant entraînée par la sortie du variateur (30), le réducteur à engrenage cylindrique extérieur (47) comprenant deux paires de pignons avec chacune deux pignons (51/52, 53/54) qui sont en prise mutuelle, parmi lesquels un pignon (52, 53) est solidaire en rotation d'un arbre porte-satellite (49) commun, tandis que l'autre pignon (51, 54) est solidaire en rotation d'un arbre d'entrée (21) du réducteur à engrenage cylindrique extérieur, voire d'un arbre de sortie (41) du réducteur à engrenage cylindrique extérieur formant la sortie, les pignons (51, 54) comportant des nombres de dents (z₁, z₄) différents et l'arbre porte-satellite (49) étant monté tournant dans un boîtier (48) qui est solidaire en rotation d'un arbre creux (40),
d) un premier embrayage (25) disposé dans la chaîne de transmission entre l'arbre d'entrée (13) et la première entrée (21) du réducteur à engrenage cylindrique extérieur (47),
e) un deuxième embrayage (45) disposé dans la chaîne de transmission entre la sortie du variateur (30) et la sortie (41) du réducteur à engrenage cylindrique extérieur (47),
f) un arbre de sortie (41) qui est entraîné par la sortie du réducteur à engrenage cylindrique extérieur (47),
caractérisé par le fait que
g) l'arbre d'entrée (21) du réducteur à engrenage cylindrique extérieur forme la première entrée et l'arbre creux (40) forment la deuxième entrée du réducteur à engrenage cylindrique extérieur (47) et par le fait que
h) le nombre de dents (z₁) du pignon (51) monté sur l'arbre d'entrée du réducteur à engrenage cylindrique extérieur est supérieur au nombre de dents (z₄) du pignon (54) monté sur l'arbre de sortie (41) du réducteur à engrenage cylindrique extérieur.

2. Transmission à variation continue comprenant :
a) un arbre d'entrée (73),
b) un variateur (90) avec un rapport de transmission réglable de façon continue qui, côté entrée, est entraîné par l'arbre d'entrée (73),
c) un réducteur-combinateur à engrenages planétaires qui se présente sous la forme d'un réducteur à engrenage cylindrique intérieur (95) avec une première entrée (81), une deuxième entrée (91) et une sortie (99), la première entrée (81) étant entraînée par l'arbre d'entrée (73) et la deuxième entrée (91) étant entraînée par la sortie du variateur (90), le réducteur à engrenage cylindrique intérieur (95) comprenant un train de pignons planétaires dont le porte-satellite (97) forme la première entrée (81),
d) un premier embrayage (85) disposé dans la chaîne de transmission entre l'arbre d'entrée (73) et la première entrée (81) du réducteur à engrenage cylindrique intérieur (95),
e) un deuxième embrayage (92) disposé dans la chaîne de transmission entre la sortie du variateur (90) et la sortie (99) du réducteur à engrenage cylindrique intérieur (95),
f) un arbre de sortie (99) qui est entraîné par la sortie du réducteur à engrenage cylindrique intérieur (95),
caractérisé par le fait que
g) la couronne (96) forme la deuxième entrée (91) et le pignon solaire (98) forme la sortie (99) du réducteur à engrenage cylindrique intérieur (95).

3. Transmission à variation continue selon la revendication 1 ou 2, caractérisé par le fait que l'arbre d'entrée (13;73) entraîne directement le variateur (30; 90).

4. Transmission à variation continue selon une ou plusieurs des revendications 1 à 3, caractérisé par le fait que l'arbre d'entrée (13;73) entraîne la première entrée (21; 81) du réducteur-combinateur à engrenages planétaires (47; 95) avec un rapport de transmission fixe.

5. Transmission à variation continue selon une ou plusieurs des revendications 1 à 4, caractérisé par le fait que le variateur (30;90) est un système à courroie à poulies réglables (31, 32).

6. Transmission à variation continue selon une ou plusieurs des revendications 1 à 5, caractérisé par le fait que le rapport de transmission fixe est un système à courroie (14; 74) à poulies fixes (15, 16).

7. Transmission à variation continue selon les revendications 5 et 6, caractérisé par le fait qu'une poulie réglable (31) et une poulie fixe (15) sont solidaires en rotation de l'arbre d'entrée (13; 73).

8. Transmission à variation continue selon une ou plusieurs des revendications 1 à 7, caractérisé par le fait que les embrayages (25, 45; 85, 92) peuvent être actionnés alternativement.

9. Transmission à variation continue selon la revendication 8, caractérisé par le fait que les embrayages (25, 45; 85, 92) peuvent être actionnés alternativement au point de transition entre deux plages (A, B) de vitesse de rotation de sortie (n_{ab}).

10. Transmission à variation continue selon la revendication 8 ou 9, caractérisé par le fait que les embrayages (25, 45; 85, 92) peuvent être actionnés alternativement au démarrage.

11. Transmission à variation continue selon une ou plusieurs des revendications 8 à 10, caractérisé par le fait que dans la première plage (A) à puissance répartie, seul le premier embrayage (25; 85) est fermé de telle sorte que la puissance transmise à l'arbre d'entrée (13; 73) est divisée et est convertie pour une part dans le variateur (30; 90) et pour l'autre part dans le réducteur-combinateur à engrenages planétaires (47;95), tandis que dans la deuxième plage (B) à puissance non répartie, seul le deuxième embrayage est est fermé de telle sorte que la puissance fournie à l'arbre d'entrée (13; 73) est convertie uniquement dans le variateur (30; 90).

12. Transmission à variation continue selon la revendication 11, caractérisé par le fait que dans la deuxième plage (B) le réducteur-combinateur à engrenages planétaires (47) agencé en réducteur à engrenages planétaires est ponté.

13. Transmission à variation continue selon la revendication 11, caractérisé par le fait que dans la deuxième plage (B) le réducteur-combinateur à engrenages planétaires (95) agencé en réducteur à engrenage cylindrique intérieur fonctionne en tant bloc fermé.

14. Transmission à variation continue selon une ou plusieurs des revendications 11 à 13, caractérisé par le fait que les rapports de transmission dans le variateur (30; 90) et dans le réducteur-combinateur à engrenages planétaires (47; 95) sont choisis tels que, sensiblement au milieu de la plage (A), la vitesse de rotation de sortie (n_{ab}) de l'arbre de sortie (41; 99) soit nulle.

15. Transmission à variation continue selon la revendication 14, caractérisé par le fait que pour démarrer un accessoire entraîné par la transmission à variation continue (10; 70), on règle tout d'abord la vitesse de sortie (n_{ab}) sur zéro par l'intermédiaire du variateur (30; 90), puis le premier embrayage (25; 85) étant fermé on règle la vitesse de rotation de sortie (n_{ab}) sur une valeur différente de zéro.

16. Transmission à variation continue selon la revendication 15, caractérisé par le fait que la vitesse de sortie (n_{ab}) étant d'abord différente de zéro, on ouvre tout d'abord les deux embrayages (25, 45; 85, 92) et on règle sur zéro, par l'intermédiaire du variateur (30; 90), la vitesse de rotation de sortie (n_{ab}).

17. Transmission à variation continue selon une ou plusieurs des revendications 1 à 16, caractérisé par le fait qu'il est entraîné avec une vitesse d'entraînement (nₐₙ) constante de l'arbre d'entrée (13, 73).

18. Transmission à variation continue selon une ou plusieurs des revendications 1 à 17, caractérisé par le fait que la vitesse de sortie (n_{ab}) de l'arbre de sortie (41; 99), en fonction du rapport de transmission sélectionné de la transmission à variation continue (10; 70), peut être réglée de façon progressive depuis des vitesses de rotation positives supérieures à zéro jusqu'à des vitesses de rotation négatives.

19. Transmission à variation continue selon une ou plusieurs des revendications 9 à 19, caractérisé par le fait que lors de la commutation entre les plages (A, B), les vitesses de rotation au niveau des embrayages (25, 45; 85, 92) respectivement côté entrée et côté sortie sont identiques, de sorte que le changement de rapport peut se faire sans interruption de la de la force de traction.

20. Transmission à variation continue selon la revendication 19, caractérisé par le fait que les embrayages (25, 45; 85, 92) sont agencés en accouplements positifs.

21. Transmission à variation continue selon une ou plusieurs des revendications 1 à 20, caractérisé par le fait que le variateur (30; 90), sur le plan de la construction, est éloigné du réducteur-combinateur à engrenages planétaires (47, 95).

22. Transmission à variation continue selon une ou plusieurs des revendications 4 à 21, caractérisé par le fait que la transmission fixe, sur le plan de la construction, est éloignée du réducteur-combinateur à engrenages planétaires (47, 95).

23. Transmission à variation continue selon une ou plusieurs des revendications 1 à 22, caractérisé par le fait qu'un engrenage de renversement (55) est disposé côté sortie.

24. Transmission à variation continue selon la revendication 23, caractérisé par le fait que l'engrenage de renversement (55) comprend un premier train de pignons (56) avec un nombre pair de pignons pour l'entraînement dans une direction arrière (R) ainsi qu'un deuxième train de pignons (57) avec un nombre impair de pignons pour l'entraînement dans une direction avant (V) ainsi q'un embrayage par lequel le premier train de pignons (56) ou le deuxième train de pignons (57) peut être inséré dans la chaîne de transmission entre l'arbre de sortie (41; 99) de la transmission à variation continue (10; 70).

25. Transmission à variation continue selon une ou plusieurs des revendications 1 à 24, caractérisé par son utilisation en tant que boîte de vitesses pour des groupes de propulsion.

26. Transmission à variation continue selon une ou plusieurs des revendications 1 à 24, caractérisé par son utilisation en tant qu'entraînement pour des éléments de machine.

27. Transmission à variation continue selon la revendication 26, caractérisé par son utilisation en tant qu'entraînement d'outils de travail de machines agricoles.
